# EUROPEAN PATENT SPECIFICATION

(11) **EP 1 701 991 B1**
(45) Date of publication and mention of the grant of the patent: **21.05.2008**
(21) Application number: 03819213.4
(22) Date of filing: 31.12.2003
(51) Int. Cl.: C08G 73/02, H01B 1/12, C08L 79/02

(54) **PROCESS FOR PREPARATION OF CONDUCTING POLYANILINE**
VERFAHREN ZUR HERSTELLUNG VON LEITFÄHIGEM POLYANILIN
PROCEDE DE PREPARATION DE POLYANILINE CONDUCTRICE

(43) Date of publication of application: 20.09.2006
(73) Proprietor: COUNCIL OF SCIENTIFIC AND INDUSTRIAL RESEARCH, New Delhi 100 001 (IN)
(72) Inventor: SUBRAMANIAM, Radhakrishnan, National Chemical Lab., Maharashtra (IN); DESHPANDE,Shripad,Dagadopant National Chemical Lab, Maharashtra (IN)
(74) Representative: Manaton, Ross Timothy
(86) International application number: PCT/IN2003/000461
(87) International publication number: WO 2005/063849

(56) References cited:
- US-A- 5 069 820
- US-A- 6 140 462
- US-A1- 2001 012 884
- US-B2- 6 586 565

## Description

The present invention relates to a new process for preparation of conducting polyaniline. More particularly the present invention relates to a simple process for preparation of conducting polyaniline in non acidic medium.

### Background of the invention

Conducting polymers are increasingly being used for different electronic and electrical applications such as sensors, light emitting diodes, antistatic agents, electromagnetic" shielding etc. Amongst the different types of conducting polymers, polyaniline is more extensively used because of its higher stability and processibility. The synthesis of polyaniline generally comprises of polymerizing aniline in aqueous acidic medium at low temperature. using oxidizing agent and initiator. This process is well documented in literature ( Ref. Kricheldorf, Handbook of Polymer Synthesis,Pt.B, Marcel Dekker, New York, 1992, p.1390; F.Lux, Polymer, Vol.35, 1994, p.2915, Y. Cao, A.Ndereatta and A.J.Heeger, Polymer,Vo1.30, 1989,p.2305). The conventional process is carried out in aqueous solution of protonic acid such as hydrochloric acid (1 mole per mole of aniline), to which is added the. oxidising agent / initiator , in the concentration range of 1 : 1.2 mole per mole of monomer. The polymer is obtained in the powder form which is filtered, washed first with water and then with 2M acidic solution for doping and finally dried. This leads to large number of steps and many disadvantages especially when polyaniline is to be produced on large scale. The polymerization medium being highly acidic, special reactors are required which are corrosion resistant. The subsequent steps are tedious since repeated washing is essential to remove the acid. In many applications, the polymer is required to be dedoped or neutralized with ammonia. This process becomes lengthy due to presence of large amount of acid in the polymer. Also, the spent wash contains large amount of acid which cannot be discharged directly. US 2001/10012884 discloses the preparation of doped polyanilines by contacting aniline with an oxidising agent in the presence of at least one organic sulfonic acid. In order to overcome these drawbacks, it is essential to obtain polyaniline by alternative route which is more environmental friendly, less corrosive and amenable to subsequent treatment of product. There is no prior art for the preparation of conducting polyaniline by non-acidic process.

### Objects of the invention

The main object of the present invention is to provide a process for obtaining conducting polyaniline directly in non-acidic / non-corrosive medium.

### Summary of the invention

Accordingly, the present invention provides a process for preparation of conducting polymer which comprises dissolving an oxidizing agent in pure solvent, adding aniline monomer drop wise under agitation, allowing the reaction mixture to remain at temperature ranging from 10°C to 35°C for a period ranging from 4 hours to 10 hrs, precipitating the polymer by dumping the reaction mixture in distilled water and separating the polymer by conventional methods to obtain conducting polyaniline, characterized in that the polymer is formed without using any acid in the reaction medium.

In one embodiment of the present invention, the oxidizing agent contains electron withdrawing groups and is selected from the group consisting of alkali metal salts with dichromate, persulfate and perchlorate ions, benzoyl peroxide and ferric chloride.

In another embodiment of the present invention, the oxidizing agent used is in concentration range of 0.1. molar to 2 molar, preferably 1.1 molar of the reactant.

In yet another embodiment of the present invention, the solvent used contains polar groups and has high dielectric constant more than 40 and is chosen from solvents such as water, n-methyl pyrrolidone, di-methyl sulfoxide, di-methyl formamide, acetonitrile and methanol or mixtures thereof

In another embodiment of the invention, the monomer used is an aromatic compound containing nitrogen and selected from the group consisting of aniline, substituted aniline, anisidine, toluidine and their substituted derivatives in a concentration in the range of 0.01 to 0.5 mol preferably 0.1 to 0.2 moL

In a feature of the present invention, the secondary doping is optionally carried out after the filtration of the polymer powder using protonic acids.

### Detailed description of the invention

The present invention provides a process for preparation of conducting polymer which comprises dissolving an oxidizing agent in pure solvent, adding aniline monomer drop wise under agitation, allowing the reaction mixture to remain at temperature ranging from 10°C to 35°C for a period ranging from 4 hours to 10 hrs, precipitating the polymer by dumping the reaction mixture in distilled water and separating the polymer by conventional methods to obtain conducting polyaniline.

The oxidizing agent contains electron withdrawing groups and is selected from the group consisting of alkali metal salts with dichromate, persulfate and perchlorate ions, benzoyl peroxide and ferric chloride. The oxidizing agent used is in concentration range of 0.1 molar to 2 molar, preferably 1.1 molar of the reactant.

The solvent used contains polar groups and has high dielectric constant more than 40 and is chosen from solvents such as water, n-methyl pyrrolidone, di-methyl sulfoxide, di-methyl formamide, acetonitrile and methanol or mixtures thereof The monomer used is an aromatic compound containing nitrogen and selected from the group consisting of aniline, substituted aniline, anisidine, toluidine and their substituted derivatives in a concentration in the range of 0.01 to 0.5 mol preferably 0.1 to 0.2 mol. In a feature of the present invention, the secondary doping is optionally carried out after the filtration of the polymer powder using protonic acids.

The process of the present invention is described hereinbelow with reference to the following examples, which are illustrative and should not be construed to limit the scope of the invention in any manner.

### EXAMPLE -1

Potasium persulfate (5.95 g) was dissolved in 150 ml distilled water and stirred for 15 minutes. Aniline ( 2.0 ml) was added drop wise with constant stirring and the reaction was allowed to proceed for 24 hr at 30°C when the solution was found to become dark green. The polyaniline powder was precipitated by dumping the reaction mixture in 500 ml distilled water, followed by filtration and drying by conventional methods given in example-1 of the present invention. The polymer powder obtained has characteristics as given in Table -I.

### EXAMPLE-2

Ferric chloride (1.77 g) was dissolved in 150 ml distilled water and stirred for 15 minutes. Aniline (2.0 ml) was added drop wise with constant stirring and the reaction was allowed to proceed for 24 hr at 30°C when the solution was found to become dark green. The polyaniline powder was precipitated by dumping the reaction mixture in 500 ml distilled water, followed by filtration and drying by conventional methods given in example-1 of the present invention. The polymer powder obtained has characteristics as given in Table -I.

### EXAMPLE -3

Benzoyl peroxide (1.77 g) was dissolved in 150 ml distilled water and stirred for 15 minutes. Aniline (2.0 ml) was added drop wise with constant stirring and the reaction was allowed to proceed for 24 hr at 30°C when the solution was found to become dark green. The polyaniline powder was precipitated by dumping the reaction mixture in 500 ml distilled water, followed by filtration and drying by conventional methods given in Example-I of the present invention. The polymer powder obtained has characteristics as given in Table -I.

### EXAMPLE-4

The ammonium per sulfate (5.3 g) was dissolved in 150 ml distilled water and stirred for 15 min. Aniline (2.04 g) was added to the above solution with constant stirring and the reaction allowed to proceed for 24 hr at 32°C. The polymer powder was precipitated by dumping the reaction mixture in 500 ml distilled water followed by filtration, washing with water and drying in air and under vacuum. The polymer powder obtained has characteristics as given in Table -I.

**TABLE-I: Data on polyaniline synthesized without acid**

| "Example Number | Oxidant Used | Aniline Used (ml) | Oxidant used (2ms) | Yield (%) | Conductivity (S/cm) | Optical Density at 800 nm |
|---|---|---|---|---|---|---|
| 1 | Potassium Persulphate | 2.0 | 5.95 | 83.32 | 5.26 x 10-5 | 0.24 |
| 2 | Ferric Chloride | 2.0 | 1.20 | 87.5 | 1.48 x 10-4 | 0.30 |
| 3 | Benzoyl Peroxide | 2.0 | 1.77 | 75.0 | 5.0 x 10-5 | 0.10 |
| 4 | Ammonium Persulphate | 2.0 | 5.3 | 87.17 | 6.88 x 10-5 | 0.28 |

The above observations clearly indicate that substantial polyaniline ( as detected by the characteristic absorption at 800 nm) is obtained in non-acidic medium by the process described in the present invention.

The main advantage of the present invention is that the conducting polymer is formed without using any acid in the reaction medium. Thus, this invention provides a process for preparing conducting polyaniline in non-corrosive, environmental friendly, non hazardous conditions.

## Claims

1. A process for preparation of conducting polymer which comprises dissolving an oxidizing agent in pure solvent, adding aniline monomer drop wise under agitation, allowing the reaction mixture to remain at temperature ranging from 10°C to 35°C for a period ranging from 4 hours to 10 hrs, precipitating the polymer by dumping the reaction mixture in distilled water and separating the polymer to obtain conducting polyaniline, **characterized in that** the polymer is formed without using any acid in the reaction medium

2. A process as claimed in claim 1 wherein the oxidizing agent contains electron withdrawing groups.

3. A process as claimed in claim 2 wherein the oxidizing agent is selected from the group consisting of alkali metal salts with dichromate, persulfate and perchlorate ions, benzoyl peroxide and ferric chloride.

4. A process as claimed in claim 1 wherein the oxidizing agent is used in concentration in the range of 0.1 molar to 2 molar of the reactant.

5. A process as claimed in claim 4 wherein the concentration of the oxidizing agent is 1.1 molar of the reactant.

6. A process as claimed in claim 1 Wherein the solvent used contains polar groups and has a dielectric constant of greater than 40.

7. A process as claimed in claim 1 wherein the solvent is selected from the group consisting of water, n-methyl pyrrolidone, di-methyl sulfoxide, di-methyl formamide, acetonitrile, methanol and any mixture thereof

8. A process as claimed in claim 1 wherein the aniline monomer used is an aromatic compound containing nitrogen.

9. A process as claimed in claim 8 wherein the aniline monomer is selected from the group consisting of aniline, substituted aniline, anisidine, toluidine and their substituted derivatives.

10. A process as claimed in claim 1 wherein the aniline monomer is used in a concentration in the range of 0.01 to 0.5 mol.

11. A process as claimed in claim 10 wherein the aniline monomer is used in a concentration in the range of 0.1 to 0.2 moL

12. A process as claimed in claim 1 wherein the obtained polymer is subjected to a secondary doping after filtration of the polymer powder using protonic acids.

## Patentansprüche

1. Verfahren zur Herstellung eines leitfähigen Polymers, umfassend das Lösen eines Oxidationsmittels in reinem Lösungsmittel, tropfenweise Zugabe eines Anilinmonomers unter Rühren, Halten der Reaktionsmischung auf eine Temperatur im Bereich von 10 °C bis 35 °C für einen Zeitraum im Bereich von 4 bis 10 Stunden, Präzipitieren des Polymers durch Einbringen der Reaktionsmischung in destilliertes Wasser und Abtrennen des Polymers um leitfähiges Polyanilin zu erhalten, **dadurch gekennzeichnet, dass** das Polymer gebildet wird ohne Verwendung irgendeiner Säure in dem Reaktionsmedium.

2. Verfahren nach Anspruch 1, wobei das Oxidationsmittel Elektronen abziehende Gruppen enthält.

3. Verfahren nach Anspruch 2, wobei das Oxidationsmittel ausgewählt ist aus der Gruppe bestehend aus Alkalimetallsalzen mit Dichromat-, Persulfat- und Perchlorationen, Benzoylperoxid und Eisen(III)chlorid.

4. Verfahren nach Anspruch 1, wobei das Oxidationsmittel in einer Konzentration im Bereich von 0,1 Molar bis 2 Molar des Reaktanten verwendet wird.

5. Verfahren nach Anspruch 4, wobei die Konzentration des Oxidationsmittels 1,1 Molar des Reaktanten ist.

6. Verfahren nach Anspruch 1, wobei das verwendete Lösungsmittel polare Gruppen enthält und eine dielektrische Konstante von größer als 40 aufweist.

7. Verfahren nach Anspruch 1, wobei das Lösungsmittels ausgewählt ist aus der Gruppe bestehend aus Wasser, N-Methylpyrrolidon, Di-Methylsulfoxid, Di-Methylformamid, Acetonitril, Methanol und in einer Mischung davon.

8. Verfahren nach Anspruch 1, wobei das verwendete Anilinmonomer eine Stickstoff enthaltende aromatische Verbindung ist.

9. Verfahren nach Anspruch 8, wobei das Anilimonomer ausgewählt ist aus der Gruppe bestehend aus Anilin, substituiertem Anilin, Anisidin, Toluidin und ihre substituierten Derivate.

10. Verfahren nach Anspruch 1, wobei das verwendete Anilinmonomer in einer Konzentration im Bereich von 0,01 bis 0,5 mol verwendet wird.

11. Verfahren nach Anspruch 10, wobei das verwendete Anilinmonomer in einer Konzentration im Bereich von 0,1 bis 0,2 mol verwendet wird.

12. Verfahren nach Anspruch 1, wobei das erhaltene Polymer einem zweiten Dotieren nach Filtrieren des Polymerpulvers unter Verwendung einer protonierenden Säure unterworfen wird.

## Revendications

1. Procédé de préparation d'un polymère conducteur, comprenant les étapes consistant à dissoudre un agent d'oxydation dans un solvant pur, à ajouter un monomère d'aniline goutte-à-goutte sous agitation, à laisser le mélange réactionnel réagir à une température allant de 10 à 35°C pendant une période allant de 4 à 10 heures, à précipiter le polymère en déversant le mélange réactionnel dans de l'eau déminéralisée et à séparer le polymère pour obtenir une polyaniline conductrice, **caractérisé en ce que** le polymère est formé sans utiliser d'acide dans le milieu réactionnel.

2. Procédé selon la revendication 1, dans lequel l'agent d'oxydation contient des groupes attracteurs d'électrons.

3. Procédé selon la revendication 2, dans lequel l'agent d'oxydation est choisi dans le groupe constitué des sels de métal alcalin avec des ions dichromate, persulfate et perchlorate, du peroxyde de benzoyle et du chlorure ferrique.

4. Procédé selon la revendication 1, dans lequel l'agent d'oxydation est utilisé à une concentration dans la plage de 0,1 à 2 mcl par rapport au réactif.

5. Procédé selon la revendication 4, dans lequel la concentration de l'agent d'oxydation est de 1,1 mol par rapport au réactif.

6. Procédé selon la revendication 1, dans lequel le solvant utilisé contient des groupes polaires et a une constante diélectrique supérieure à 40.

7. Procédé selon la revendication 1, dans lequel le solvant est choisi dans le groupe constitué de l'eau, de la N-méthylpyrrolidone, du diméthylsulfoxyde, du diméthylformamide, de l'acétonitrile, du méthanol et de tout mélange de ceux-ci.

8. Procédé selon la revendication 1, dans lequel le monomère d'aniline utilisé est un composé aromatique azoté.

9. Procédé selon la revendication 8, dans lequel le monomère d'aniline est choisi dans le groupe constitué de l'aniline, d'une aniline substituée, de l'anisidine, de la toluidine et de leurs dérivés substitués.

10. Procédé selon la revendication 1, dans lequel le monomère d'aniline est utilisé à une concentration dans la plage de 0,01 à 0,5 mol.

11. Procédé selon la revendication 10, dans lequel le monomère d'aniline est utilisé à une concentration dans la plage de 0,1 à 0,2 mol.

12. Procédé selon la revendication 1, dans lequel le polymère obtenu est soumis à un dopage secondaire après filtration du polymère en poudre en utilisant des acides protoniques.
